# EUROPÄISCHE PATENTANMELDUNG

(11) **EP 4 726 114 A1**
(43) Veröffentlichungstag der Anmeldung: **15.04.2026**
(21) Anmeldenummer: 24205649.7
(22) Anmeldetag: 09.10.2024
(51) Int. Cl.: E02F 9/26

(54) **VERFAHREN UND SYSTEM ZUR POSITIONSBESTIMMUNG UND/ODER AUSRICHTUNGSBESTIMMUNG VON WERKZEUGEN VON BAUMASCHINEN IN EINEM BAUFELD**

(71) Anmelder: BAUER Maschinen GmbH, 86529 Schrobenhausen (DE)
(72) Erfinder: Brüderle, Peter, 85123 Karlskron (DE); Semel, Matthias, 85276 Pfaffenhofen an der Ilm (DE)
(74) Vertreter: Wunderlich & Heim Patentanwälte PartG mbB

(57) **Zusammenfassung**

Die Erfindung betrifft ein Verfahren zur Positionsbestimmung und/oder Ausrichtungsbestimmung von Werkzeugen (1a) von Baumaschinen (1) in einem Baufeld (BF), mit den Schritten: Anbringen von mindestens einer Stereokamera (2a; 2b) an mindestens einer Baumaschine (1) oder an einem beweglichen Träger, derart, dass die Stereokamera zumindest einen Erfassungsbereich (2a1; 2b1) innerhalb des Baufelds (BF), vorzugsweise einen Arbeitsbereich der Baumaschine (1), erfassen kann, Vorsehen von mindestens einem Referenzpunkt (3), dessen Position bezüglich eines vordefinierten 3D-Weltkoordinatensystems bekannt ist und der in den Aufnahmen der Stereokamera erkannt werden kann, in dem Erfassungsbereich (2a1; 2b1) der mindestens einen Stereokamera (2a; 2b), Kalibrieren der mindestens einen Stereokamera (2a;2b) auf der Grundlage der Erfassung des mindestens einen Referenzpunkts (3) und von Triangulation, um eine Transformation zwischen dem 3D-Weltkoordinatensystem und einem 2D-Bildkoordinatensystem der mindestens einen Stereokamera (2a; 2b) zu ermitteln, Erstellen eines virtuellen digitalen 3D-Geländemodells des Baufelds (BF) durch digitale Bildverarbeitung, insbesondere Stereoskopie, und Bilderkennung auf der Grundlage der Erfassung des Baufelds (BF) durch die mindestens eine Stereokamera (2a; 2b), und Darstellen von vorgegebenen Arbeitspositionen und von erfassten Ist-Werkzeugpositionen und/oder Ist-Werkzeugneigungen des Werkzeugs (1a) der mindestens einen Baumaschine (1) in dem virtuellen digitalen 3D-Geländemodell.

## Beschreibung

Die Erfindung betrifft ein Verfahren und ein System zur Positionsbestimmung und/oder Ausrichtungsbestimmung von Werkzeugen von Baumaschinen in einem Baufeld.

### Stand der Technik

Es ist bekannt, Ist-Positionen von Baumaschinen durch an den jeweiligen Geräteträgern der Baumaschinen angebaute GPS-Empfänger zu bestimmen. Bearbeitungspositionen bzw. -koordinaten innerhalb eines Baufelds können auf dieser Grundlage unter Berücksichtigung von zusätzlichen Korrekturdaten ermittelt werden, um die der Positionsbestimmung auf dieser Grundlage allein durch GPS-Empfänger inhärenten Ungenauigkeiten zu verringern. Die Positionsbestimmung ist dennoch stets von dem dauerhaften Empfang bzw. Verfügbarkeit und der Genauigkeit eines GPS-Signals abhängig. Beispielsweise ist es denkbar, dass der Empfang von GPS- oder anderen Satelliten-gestützten Signalen in Krisengebieten beschränkt oder ganz blockiert wird, um die Nutzung der Signale durch Konfliktparteien zu verhindern.

Außerdem sind GPS-Empfänger mit erhöhter Genauigkeit teuer und die permanente Rückrechnung von mit GPS-Empfängern bestimmten Positionen innerhalb des Baufelds ist rechenintensiv. Dies gilt umso mehr, wenn mehrere Baumaschinen in einem Baufeld eingesetzt und positioniert werden müssen.

Über mindestens 3 Referenzpunkte kann sich eine Baumaschine generell in einem digitalen Geländemodell verorten. Das kann bspw. über BLE ("Bluetooth Low Energy") Beacons oder Sender erfolgen, die auf der Bluetooth-Technik basierende Signale senden und empfangen. Um die Signale der Beacons zu empfangen, sind meistens festinstallierte Antennenanlagen in Verwendung. Alternativ reicht aber ein Smartphone. Sobald sich das Smartphone mit der entsprechenden Ausstattung im Empfangsbereich eines BLE Beacon befindet, werden die Daten gelesen. Sobald sich mehrere Empfänger in einem entsprechenden Bereich befinden, kann eine genaue Positionsbestimmung der BLE Beacons erfolgen. Die Reichweite eines Senders beträgt ca. 10-30 Meter, kann aber durch Wände oder andere Hindernisse stark eingeschränkt werden.

Üblich ist es daher immer noch, Positionen (z. B. Bohr- oder Ansatzpunkte) innerhalb eines Baufelds durch Vermesser zu bestimmen und zu markieren. Dieser Vorgang ist aber ebenfalls teuer und abhängig von verfügbarem entsprechend qualifizierten Personal.

Die US 2022/0 333 355 A1 offenbart ein Verfahren zur Bereitstellung einer Arbeitsführungslinie für Baumaschinen, wobei das Verfahren Folgendes umfasst: Erkennen eines Objekts, das sich um die Baumaschine herum befindet, und Erfassen eines Bildes des Objekts durch eine 3D-Kamera, die eine Stereokamera und einen Objekterkennungssensor aufweist, der ein RADAR-Sensor oder ein LIDAR-Sensor sein kann und eine Entfernung, eine Richtung usw. erkennen kann, indem er elektromagnetische Wellen ausstrahlt und wieder empfängt. Das Verfahren umfasst ferner ein Erhalten einer Referenzkoordinate, die einer Position der Baumaschine entspricht, durch eine Positionsinformations-Empfangsvorrichtung, die ein GPS, Global Navigation Satellite System (GLONASS), Galileo oder ähnliches System sein kann, ein Ermitteln einer relativen Koordinate des Objekts relativ zur Baumaschine aus dem Bild, eine Koordinatentransformation der relativen Koordinate basierend auf der Referenzkoordinate, um eine dreidimensionale Koordinate zu erhalten, und ein Darstellen des Bildes mit der dreidimensionalen Koordinate auf einem Bildschirm der Baumaschine. Durch die so gewonnenen dreidimensionalen Koordinatendaten ist es möglich, mit der Steuerungseinrichtung der Baumaschine zusammenzuarbeiten, z. B. zur Maschinenführung oder Maschinensteuerung.

Die EP 4 296 436 A1 offenbart ein System zum Planen einer von einer Baumaschine auszuführenden Erdbewegungsarbeit. Das System umfasst ein Messsystem, das zum Erfassen von 3D-Messdaten eines unebenen Geländes in einer Umgebung der Baumaschine in mindestens einem ersten Erfassungsbereich konfiguriert ist, eine Kontextkamera, die eine bekannte Position relativ zu dem Messsystem und/oder den 3D-Messdaten aufweist und zum Erfassen von Kontextbilddaten des Geländes innerhalb des ersten Erfassungsbereichs konfiguriert ist, eine Benutzerschnittstelle, die so konfiguriert ist, dass sie einem Bediener der Baumaschine mindestens ein auf den Kontextbilddaten basierendes Kontextbild anzeigt und Benutzereingaben von dem Bediener empfängt, wobei die Benutzereingaben als eine Auswahl von Pixeln des Kontextbildes interpretierbar sind oder diese umfassen, und eine Recheneinheit, die zumindest mit dem Messsystem und der Benutzerschnittstelle operativ gekoppelt ist. Die Recheneinheit ist konfiguriert, um ein 3D-Geländemodell des Geländes innerhalb des ersten Erfassungsbereichs auf der Grundlage der 3D-Messdaten zu erzeugen, die Benutzereingabe als eine Auswahl von Pixeln des Kontextbildes zu interpretieren, unter Berücksichtigung der bekannten relativen Position der Kontextkamera die Auswahl von Pixeln auf einer Oberfläche des 3D-Geländemodells abzubilden, 3D-Koordinaten auf der Oberfläche basierend auf der Abbildung zu bestimmen, und die 3D-Koordinaten an die Maschinensteuereinheit bereitzustellen, um die Erdbewegungsarbeit zumindest teilweise auf der Grundlage der 3D-Koordinaten zu steuern.

Die EP 4 324 988 A1 offenbart ein Verfahren und ein System zur Konfiguration einer Maschinensteuerungseinheit einer Baumaschine zur Steuerung eines Erdbewegungsvorgangs, der eine Vielzahl von nacheinander auszuführenden Phasen umfasst, beispielsweise zur Steuerung eines Motorgraders oder einer Raupe für den Graben- oder Straßenbau. Das System umfasst ein Messsystem mit mindestens einer Messeinheit an der Baumaschine, wobei jede Messeinheit zur Erfassung von 3D-Punktwolkendaten, d. h. als dreidimensionale Messdaten, ausgebildet ist. Jede Messeinheit umfasst mindestens einen Laserscanner, eine Vielzahl von ToF ("Time-of-Flight")-Kameras, ein Millimeterwellen-Radarsystem und/oder ein oder mehrere Stereokamerasysteme. Das System umfasst ferner eine Kontextkamera, die eine bekannte Position in Bezug auf das Messsystem und/oder die dreidimensionalen Messdaten aufweist und für die Erfassung von Kontextbilddaten des Geländes innerhalb des ersten Erfassungsbereichs konfiguriert ist. In diesem Fall ist eine Benutzerschnittstelle dazu eingerichtet, einem Bediener der Baumaschine mindestens ein auf den Kontextbilddaten basierendes Kontextbild anzuzeigen, eine Recheneinheit ist dazu eingerichtet, erkannte Elemente auf dem angezeigten Kontextbild zu überlagern und Eingaben des Bedieners zu empfangen, die sich auf eine nächste Phase des Erdbewegungsvorgangs beziehen, und die Konfiguration der Maschinensteuereinheit basiert ebenfalls auf den Eingaben des Bedieners. Optional kann die Benutzerschnittstelle ein berührungsempfindliches Display umfassen, auf dem das Kontextbild angezeigt wird und auf dem die Benutzereingabe empfangen wird. Die Eingabe des Bedieners zur Einstellung kann eine Auswahl eines oder mehrerer der erkannten Elemente umfassen.

Diese Systeme beschäftigen sich generell mit Lösungen, um Objekte im unmittelbaren Arbeitsbereich einer jeweiligen Baumaschine zu erfassen und in einem digitalen Geländemodell relativ zur Baumaschine für einen Maschinenbediener darzustellen, um die Bedienung der jeweiligen Baumaschine zu unterstützen.

Aus der EP 3 553 229 A1 ist eine Tiefbauvorrichtung bekannt, bei der an einem oberen Bereich eines Mastes mindestens eine Kamera angeordnet ist, durch die ein Bild der Tiefbauvorrichtung und ihrer Umgebung als Maßnahme zur optischen Sicherheitskontrolle einer Baustelle erfassbar ist. Durch Verwendung mehrerer Kameras können deren Bilder mit einer entsprechenden Software derart verknüpft werden, dass ein 360°-Umgebungsbild aus mehreren Kameraeinstellungen zusammengesetzt wird. Sofern sich eine Person oder ein Gegenstand der Tiefbauvorrichtung nähert und in einen Sicherheitsbereich eindringt, kann über eine Steuereinheit ein Warnsignal in akustischer, optischer oder sonstiger Weise ausgegeben werden. Bei dieser Lösung wird lediglich das Umgebungsbild als solches aufgezeichnet und mit Blick auf eine Bewegung eines fremden Objekts ausgewertet.

Die DE 10 2021 214 441 A1 offenbart ein Verfahren zur Korrektur einer Orientierungswinkel-Ermittlung eines Sensorsystems einer Arbeitsmaschine, das dazu eingerichtet ist, Orientierungswinkel, die die Orientierung eines drehbaren Oberwagens der Arbeitsmaschine anzeigen, zu ermitteln, wobei am Oberwagen wenigstens eine Kamera angebracht ist, die eine Umgebung der Arbeitsmaschine erfasst.

Die Erfindung beruht und nutzt grundsätzlich Technologie der Stereoskopie oder Stereo-Vision, bei der es sich um ein seit vielen Jahren erforschtes Gebiet der digitalen

Bildverarbeitung handelt. Insofern wird im Rahmen dieser Offenbarung auf eine detaillierte Beschreibung dieser Technologie verzichtet Das Ziel der Stereoskopie ist es, Tiefeninformationen aus mindestens zwei Bildern, die dasselbe Objekt zur selben Zeit aus unterschiedlichen Blickwinkeln zeigen, zu gewinnen. Durch die perspektivischen Differenzen in den beiden zweidimensionalen Bildern gelingt es, die Entfernung zu dem abgebildeten Objekt zu berechnen. Für eine Stereoaufnahme benötigt man also mindestens zwei Kameras. Das Sehen mit zwei Kameras wird als räumliches, dreidimensionales oder als Stereosehen bezeichnet.

Möchte man wissen wo sich ein Objektpunkt im Raum befindet, muss die relative Position und Orientierung der Kamera bezüglich eines vordefinierten Weltkoordinatensystems bekannt sein. Diese Größen bezeichnet man als extrinsische oder äußere Kameraparameter. Das Weltkoordinatensystem wird mit Hilfe eines bekannten Kalibrierkörpers bestimmt. Der Vorgang, bei dem die intrinsischen und extrinsischen Kameraparameter ermittelt werden, wird Kalibrierung genannt. Das Ziel der Kamerakalibrierung ist es, die Transformation zwischen dem 3D-Weltkoordinatensystem und dem 2D-Bildkoordinatensystem zu ermitteln.

Der Erfindung liegt die **Aufgabe** zugrunde, ein Verfahren und ein System zur Positionsbestimmung und/oder Ausrichtungsbestimmung von Werkzeugen von Baumaschinen in einem Baufeld anzugeben, mit welchen die Positionsbestimmung kostengünstig und genau möglich ist.

Die Aufgabe wird nach der Erfindung zum einen durch ein Verfahren bzw. System zur Positionsbestimmung und/oder Ausrichtungsbestimmung von Werkzeugen von Baumaschinen in einem Baufeld mit den Merkmalen des Anspruchs 1 bzw. des Anspruchs 10 gelöst. Bevorzugte Ausführungsformen der Erfindung sind in den abhängigen Ansprüchen angegeben.

Das erfindungsgemäße Verfahren ist dadurch gekennzeichnet, dass es die folgenden Schritte umfasst:
- Anbringen von mindestens einer Stereokamera an mindestens einer Baumaschine oder an einem beweglichen Träger, derart, dass die Stereokamera zumindest einen Erfassungsbereich innerhalb des Baufelds, vorzugsweise einen Arbeitsbereich der Baumaschine, erfassen kann,
- Vorsehen von mindestens einem Referenzpunkt, dessen Position bezüglich eines vordefinierten 3D-Weltkoordinatensystems bekannt ist und der in den Aufnahmen der Stereokamera erkannt werden kann, in dem Erfassungsbereich der mindestens einen Stereokamera,
- Kalibrieren der mindestens einen Stereokamera auf der Grundlage der Erfassung des mindestens einen Referenzpunkts und von Triangulation, um eine Transformation zwischen dem 3D-Weltkoordinatensystem und einem 2D-Bildkoordinatensystem der mindestens einen Stereokamera zu ermitteln,
- Erstellen eines virtuellen (digitalen) 3D-Geländemodells des Baufelds durch digitale Bildverarbeitung (Stereoskopie) und Bilderkennung auf der Grundlage der Erfassung des Baufelds durch die mindestens eine Stereokamera (nach der Kalibrierung), und
- Darstellen von vorgegebenen Arbeitspositionen (z. B. Soll-Bohr- oder Ansatzpunkte) und von erfassten Ist-Werkzeugpositionen und/oder Ist-Werkzeugneigungen des Werkzeugs der mindestens einen Baumaschine in dem virtuellen 3D-Geländemodell.

Eine Grundidee der Erfindung liegt darin, ein digitales virtuelles 3D-Geländemodell einer Baustelle (eines Baufelds) zu erzeugen, und zwar auf der Grundlage von Stereoskopie mittels einer Stereokamera, die zumindest einen Erfassungsbereich innerhalb des Baufelds, vorzugsweise den Arbeitsbereich einer Baumaschine, erfasst. Zur Referenzierung/Kalibrierung wird mindestens ein Bezugspunkt vorgesehen und durch die Stereokamera erfasst, dessen genaue Weltkoordinaten bekannt sind (z. B. durch Vermessen oder GPS-Empfänger). Nach der Kalibrierung wird das digitale virtuelle 3D-Geländemodell auf der Basis der mit der Stereokamera erfassten Bilder des Baufelds erstellt.

Das 3D-Geländemodell kann laufend weiter aktualisiert und verbessert werden, indem während des Baubetriebs weitere Aufnahmen des Baufelds durch die Stereokamera vorgenommen und mittels Stereoskopie analysiert werden, ggf. auch in anderer Ausrichtung der Kamera aufgrund der Bewegung der Baumaschine oder unter Nutzung einer weiteren Stereokamera mit anderer Ausrichtung an derselben Baumaschine oder an einer weiteren Baumaschine, die innerhalb desselben Baufelds betrieben wird. Denkbar ist auch, die Stereokamera an einem beweglichen Träger vorzusehen, beispielsweise einem Stativ oder Gestell, das temporär an einer geeigneten Position oder an mehreren verschiedenen Positionen innerhalb des Baufelds aufgestellt wird.

Erfindungsgemäß werden eine Reihe von Vorteilen erzielt, nämlich dass zur Erstellung des virtuellen 3D-Geländemodells keine teure GPS-Ausrüstung erforderlich ist, dass das 3D-Geländemodell für eine Dokumentation eines Abgleichs von Soll- und Ist-Situation verwendet werden kann (beispielsweise als Qualitätsnachweis oder Dokumentation des Baufortschritts), und/oder dass das virtuelle digitale 3D-Geländemodell auch zur Positionierung der Baumaschine (oder weiterer Baumaschinen) bzw. deren Werkzeuge verwendet werden kann (ggf. auch für eine Neigungseinstellung eines Bohrwerkzeugs), ohne dass an jeder Baumaschine und dauerhaft teure GPS-Ausrüstung vorgehalten und betrieben werden muss.

Während bisherige Anwendungen der Erfassung der Baustelle durch Sensoren einschließlich Stereokameras das Nahfeld um eine Arbeitsposition einer Baumaschine verorten und unmittelbar das Ergebnis nutzen, um die Manipulation bzw. Steuerung der Baumschiene zu unterstützen, zielt die vorliegende Erfindung darauf ab, zunächst mit der Stereoskopie ein globales virtuelles digitales 3D Geländemodell des Baufelds zu erstellen, um dann auf der Basis dieser Information plus der aktuellen, weiter erfassten Information der Stereokamera(s) ein Werkzeug bzw. eine Baumaschine zu seinem Produktionsort zu bewegen und hier die Bauaufgabe überwacht durchzuführen.

Überwacht meint in diesem Falle, dass neben der Bestimmung des Bauelementes in Relation zu einem Baustellenplan (einzelner Bohrpfahl), an dem gerade gearbeitet wird, weitere qualitätsrelevante Informationen wie die Position des Bohransatzpunktes, die Ausrichtung des Gerätes zu dem Bohrloch (entscheidend für die Vermessung der Vertikalität), die Ausrichtung des Bohrrohres zur Geländeoberkante oder auch die Neigung eines Seilgreifers zum Schlitz bestimmt werden.

Erfindungsgemäß kann das Verfahren daher auch das Positionieren und/oder Ausrichten des Werkzeugs der mindestens einen Baumaschine (oder einer anderen Baumaschine) auf der Grundlage des virtuellen 3D-Geländemodells umfassen, um Soll- und Ist-Werte zur Übereinstimmung zu bringen.

Die Verbesserung der Genauigkeit des virtuellen digitalen 3D-Geländemodells kann durch Wiederholen, beispielsweise intermittierend oder kontinuierlich, der Erfassung des Baufelds durch die mindestens eine Stereokamera, vorzugsweise während oder nachdem deren Position oder Ausrichtung verändert wird/wurde und einen anderen Erfassungsbereich aufweist, und durch fortschreitende Erweiterung und Aktualisierung/Abgleich des virtuellen 3D-Geländemodells durch digitale Bildverarbeitung (Stereoskopie) und Bilderkennung auf der Grundlage der wiederholten Erfassung des Baufelds durch die mindestens eine Stereokamera erreicht werden.

Die Verbesserung der Genauigkeit des virtuellen digitalen 3D-Geländemodells kann auch dadurch erreicht werden, dass mindestens eine weitere Stereokamera vorgesehen wird, die so angeordnet wird, dass sie einen von dem Erfassungsbereich der mindestens einen Stereokamera verschiedenen Bereich des Baufeld und vorzugsweise den mindestens einen Referenzpunkt und/oder einen weiteren Referenzpunkt, dessen genaue Weltkoordinaten bekannt sind (z. B. durch Vermessen oder GPS-Empfänger), erfasst, dass die mindestens eine weitere Stereokamera auf der Grundlage der Erfassung des mindestens einen und/oder weiteren Referenzpunkts kalibriert wird und durch Triangulation die Transformation zwischen dem 3D-Weltkoordinatensystem und dem 2D-Bildkoordinatensystem der mindestens einen weiteren Stereokamera ermittelt wird. Die Verbesserung der Genauigkeit des virtuellen 3D-Geländemodells des Baufelds gelingt dann durch Einbeziehen der Erfassung des Baufelds durch die mindestens eine weitere Stereokamera in das virtuelle 3D-Geländemodell des Baufelds durch digitale Bildverarbeitung (Stereoskopie) und Bilderkennung.

Die Verbesserung der Genauigkeit des virtuellen digitalen 3D-Geländemodells kann auch dadurch erreicht werden, dass weitere Einflussfaktoren, beispielsweise ein Sonnenstand oder eine Windrichtung ermittelt und bei der Erstellung und/oder Aktualisierung/Abgleich des virtuellen digitalen 3D-Geländemodells berücksichtigt werden.

Die autonome 2-dimensionale Orientierung von Baumaschinen auf einem Baufeld ohne permanente Bestimmung der Position mittels externer Signale wie GPS etc. kann erfindungsgemäß durch Ableiten eines Maschinen-Koordinatensystems einer/der Baumaschine oder eines/des Werkzeugs oder eines lokalen Koordinatensystems von dem virtuellen 3D-Geländemodell und Verwenden des abgeleiteten Maschinen-Koordinatensystems zur lokalen Positions- und/oder Ausrichtungsbestimmung der Baumaschine oder des Werkzeugs innerhalb des Baufelds erreicht werden. Das abgeleitete Maschinen-Koordinatensystem kann beispielsweise in eine Steuerung der Baumaschine geladen werden.

Schließlich kann das erfindungsgemäße Verfahren auch ein Abgleichen eines digitalen Baustellenplans des Baufelds mit dem virtuellen 3D-Geländemodell des Baufelds und das Identifizieren von Positionsabweichungen umfassen. Das Ergebnis dieses Abgleichs kann zum Zwecke der Dokumentation des Arbeitsprozesses, beispielsweise im Rahmen der Qualitätssicherung und des Qualitätsnachweises verwendet und gespeichert werden, und/oder zur Korrektur der Positionierung eines/des Werkzeugs einer/der Baumaschine im laufenden Bauprozess im Falle von Positionsabweichungen genutzt werden.

Die Erfindung betrifft demnach auch ein System zur Positionsbestimmung und/oder Ausrichtungsbestimmung von Werkzeugen von Baumaschinen in einem Baufeld, insbesondere nach dem Verfahren gemäß der Erfindung, umfassend mindestens eine Stereokamera, die an mindestens einer Baumaschine oder an einem beweglichen Träger, derart angebracht ist, dass die Stereokamera zumindest einen Erfassungsbereich innerhalb des Baufelds, vorzugsweise einen Arbeitsbereich der Baumaschine, erfassen kann, mindestens einen Referenzpunkt, dessen Position bezüglich eines vordefinierten 3D-Weltkoordinatensystems bekannt ist und der in den Aufnahmen der Stereokamera erkannt werden kann, in dem Erfassungsbereich der mindestens einen Stereokamera, und eine Einrichtung, die ausgestaltet ist, um folgende Schritte des Verfahrens auszuführen:
- Kalibrieren der mindestens einen Stereokamera auf der Grundlage der Erfassung des mindestens einen Referenzpunkts und von Triangulation, um eine Transformation zwischen dem 3D-Weltkoordinatensystem und einem 2D-Bildkoordinatensystem der mindestens einen Stereokamera zu ermitteln,
- Erstellen eines virtuellen digitalen 3D-Geländemodells des Baufelds durch digitale Bildverarbeitung, insbesondere Stereoskopie, und Bilderkennung auf der Grundlage der Erfassung des Baufelds durch die mindestens eine Stereokamera, und
- Darstellen von vorgegebenen Arbeitspositionen und von erfassten Ist-Werkzeugpositionen und/oder Ist-Werkzeugneigungen des Werkzeugs der mindestens einen Baumaschine in dem virtuellen digitalen 3D-Geländemodell.

Im Folgenden wird die Erfindung mit Bezug auf die beigefügte Zeichnung anhand eines Ausführungsbeispiels erläutert. Darin zeigen:
Fig. 1 eine schematische Darstellung eines Baufelds zur Erläuterung des erfindungsgemäßen Verfahrens; und
Fig. 2 eine schematische Darstellung der Beziehung zwischen einer Baumaschine bzw. einem Baugerät und mehreren Referenzpunkten zur Bestimmung von Ausrichtung und Position der Baumaschine/des Baugeräts durch Abstandsmessung zu den Referenzpunkten auf der Grundlage der Stereoskopie.

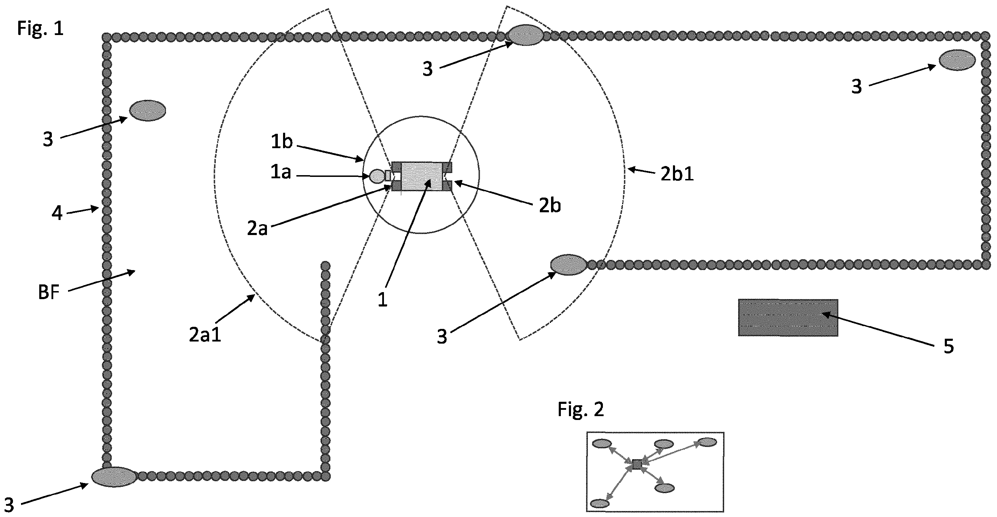

Das in Fig. 1 und 2 stark schematisch dargestellte Verfahren zur Positionsbestimmung und/oder Ausrichtungsbestimmung von Werkzeugen 1a von Baumaschinen 1 in einem Baufeld BF, in dem hier beispielhaft angedeutet eine überschnittene Bohrpfahlwand 4 durch zahlreiche ausgerichtete und einander teilweise überlappende Bohrpfähle mit einem Werkzeug in Form eines Bohrgeräts oder Bohrrohrs 1a hergestellt werden soll, umfasst zunächst das Vorsehen von mindestens einem Referenzpunkt 3, dessen Position bezüglich eines vordefinierten 3D-Weltkoordinatensystems bekannt ist.

Dieser Referenzpunkt 3 dient als ein markantes, eingemessenes Objekt auf dem Baufeld als Referenz für weitere Verortung. Die Position des Referenzpunktes 3 kann durch einen Vermesser bestimmt werden, ggf. auch unter Nutzung von Satellitensignalen. Nachdem die einmalige Bestimmung der Position innerhalb des 3D-Weltkoordinatensystems ausreicht, kann hierfür auch ein ggf. aufwendigerer Prozess akzeptiert werden als bei der permanenten Positionsbestimmung durch einfache Navigationsgeräte.

Sodann wird erfindungsgemäß mindestens eine Stereokamera 2a; 2b an mindestens einer Baumaschine 1 oder an einem beweglichen Träger derart angebracht, dass die Stereokamera zumindest einen Erfassungsbereich 2a1; 2b1 innerhalb des Baufelds BF, vorzugsweise einen Arbeitsbereich 1b der Baumaschine 1, erfassen kann und so, dass der mindestens eine Referenzpunkt 3 in den Aufnahmen der Stereokamera des Erfassungsbereichs 2a1 ;2b1 erkannt werden kann. Es kann hierbei genügen, dass der Referenzpunkt 3 wenigstens in einer Drehposition der Baumaschine, welche eine mobile Baumaschine in der Form eines Tiefbaugeräts mit fahrbarem Unterwagen und relativ dazu drehbarem Oberwagen sein kann, erfasst werden kann.

Da die Sichtbarkeit und die Entfernung des Referenzpunktes zum Tiefbaugerät auch in einen Bereich fallen kann, in dem eine Positionierung zu diesem Punkt nicht möglich ist, sind vorzugsweise mehrere Referenzpunkte 3 auf dem Baufeld BF verteilt für eine vollständige Erfassung des gesamten Baufelds mittels der Stereokamera(s) angeordnet.

Die mindestens eine Stereokamera wird vorzugsweise so an der Baumaschine angebracht, dass ihr Erfassungsbereich 2a1; 2b1 einen relevanten Bereich des Baufelds einschließlich mindestens einem Referenzpunkt 3 erfasst. Dazu kann die Stereokamera an einem drehbaren Oberwagen oder an einem Mast oder einer anderen exponierten Komponente der Baumaschine montiert werden, wo der Erfassungsbereich durch die Baumaschine selbst oder Gegenstände im unmittelbaren Arbeitsbereich 1b nicht oder nur kaum beeinträchtigt ist. Durch die Drehung des Oberwagens während des Arbeitsprozesses an einem Arbeitspunkt und durch die Verlagerung der Baumaschine zu einem anderen Arbeitspunkt wird der Erfassungsbereich 2a1; 2b1 der Stereokamera permanent verlagert und der erfasste Abschnitt des Baufelds um die Baumaschine herum erweitert.

Da der mindestens eine Referenzpunkt 3 in den Aufnahmen der Stereokamera des Erfassungsbereichs 2a1; 2b1 erkannt werden kann, kann die Stereokamera den Abstand zu diesem Punkt exakt wiedergeben. Durch ihren bekannten Anbringungsort an der Baumaschine kann somit auf die Orientierung des Oberwagens und die Position des Tiefbaugerätes geschlossen werden. Nach Verlagerung der Baumaschine bzw. des Tiefbaugeräts wird der Referenzpunkt 3 unter einem anderen Sichtwinkel erfasst.

Durch Kalibrieren der mindestens einen Stereokamera 2a; 2b auf der Grundlage der Erfassung des mindestens einen Referenzpunkts 3 und von Triangulation kann in an sich bekannter Weise eine Transformation zwischen dem 3D-Weltkoordinatensystem und einem 2D-Bildkoordinatensystem der mindestens einen Stereokamera 2a; 2b ermittelt werden.

Sodann kann, ebenfalls in an sich bekannter Weise, nach der Kalibrierung ein virtuelles digitales 3D-Geländemodell des Baufelds BF durch digitale Bildverarbeitung (Stereoskopie) und Bilderkennung auf der Grundlage der Erfassung des Baufelds BF durch die mindestens eine Stereokamera 2a; 2b erstellt werden.

Indem die über einen längeren Zeitraum erfassten Kamerabilder desselben Erfassungsabschnitts oder unterschiedlicher Erfassungsabschnitte immer weiter miteinander verrechnet werden, kann im Laufe der Zeit nicht nur ein Bereich von 360° unmittelbar um die Baumaschine herum, sondern das gesamte Baufeld erfasst und in dem virtuellen digitalen 3D-Geländemodell abgebildet werden.

Die intermittierend oder kontinuierlich wiederholte Erfassung schon erfasster Sektionen des Baufelds BF durch die mindestens eine Stereokamera 2a; 2b, vorzugsweise während oder nachdem deren Position oder Ausrichtung verändert wird/wurde und dann einen anderen Erfassungsbereich 2a1; 2b1 hat, und die fortschreitende Erweiterung und Aktualisierung/Abgleich des virtuellen digitalen 3D-Geländemodells durch digitale Bildverarbeitung (Stereoskopie) und Bilderkennung auf der Grundlage der wiederholten Erfassung des Baufelds BF durch die mindestens eine Stereokamera 2a; 2b verbessert kontinuierlich die Abdeckung und die Genauigkeit des virtuellen digitalen 3D-Geländemodells.

Zur Verbesserung der Abdeckung und der Genauigkeit des virtuellen digitalen 3D-Geländemodells kann mindestens eine weitere Stereokamera 2a; 2b vorgesehen und so angeordnet werden, dass sie einen von dem Erfassungsbereich 2a1; 2b1 der mindestens einen Stereokamera 2a; 2b zumindest teilweise verschiedenen Bereich des Baufelds BF und vorzugsweise den mindestens einen Referenzpunkt 3 und/oder einen oder mehrere weitere Referenzpunkt(e) 3 erfasst. Diese weitere(n) Stereokamera(s) kann/können auf der Grundlage der Erfassung des mindestens einen und/oder auf der Grundlage des einen oder weiterer Referenzpunkte 3 durch Triangulation kalibriert werden, um die Transformation zwischen dem 3D-Weltkoordinatensystem und dem 2D-Bildkoordinatensystem der mindestens einen weiteren Stereokamera 2a; 2b zu ermitteln. Durch Einbeziehen der Erfassung des Baufelds BF durch die mindestens eine weitere Stereokamera 2a; 2b in das virtuelle 3D-Geländemodell des Baufelds BF durch digitale Bildverarbeitung (Stereoskopie) und Bilderkennung werden Abschnitte des Baufelds unter anderen Winkeln erfasst, so dass - auch wenn die Stereokameras nicht in weiten Bereichen verschwenkt werden und/oder ihr jeweiliger Erfassungsbereich begrenzt ist - eine großflächige Abdeckung des Baufelds erreicht werden kann.

Zur Verbesserung der Genauigkeit des virtuellen digitalen 3D-Geländemodells können auch weitere Einflussfaktoren, beispielsweise ein Sonnenstand oder eine Windrichtung mittels entsprechender Sensoren erfasst und solche weiteren Einflussfaktoren bei der Erstellung und/oder der Aktualisierung/dem Abgleich des virtuellen digitalen 3D-Geländemodells berücksichtigt werden.

Auf der Grundlage des virtuellen digitalen 3D-Geländemodells können - ggf. nach Erreichen einer vorzugebenden Mindestgenauigkeit - vorgegebene Arbeitspositionen (z. B. Soll-Bohr- oder Ansatzpunkte) und von der Stereokamera/den Stereokameras erfassten Ist-Werkzeugpositionen und/oder Ist-Werkzeugneigungen des Werkzeugs 1a der mindestens einen Baumaschine 1 in dem virtuellen 3D-Geländemodell dargestellt werden.

Sobald eine vorgegebene Genauigkeit des virtuellen digitalen 3D-Geländemodells erreicht ist, kann selbstverständlich die Erfassungshäufigkeit durch die Stereokamera(s) und der damit einhergehende Rechenaufwand reduziert werden.

Die Darstellung in dem virtuellen digitalen 3D-Geländemodell kann sodann als Grundlage für die Positionierung und Ausrichtung des Werkzeugs 1a der mindestens einen Baumaschine 1 dienen, um Soll- und Ist-Werte zur Übereinstimmung zu bringen. Insbesondere können durch die Aufnahmen der Stereokamera(s) Ansatzpunkte von Spezial-Tiefbau-Elementen (bspw. Pfähle oder Paneele, etc.) identifiziert werden, wobei durch den Einsatz von mehreren Stereokameras die X-, Y und Z-Koordinaten des Ansatzpunktes, sowie eine mögliche Orientierung auch für nicht-rotationssymmetrische Elemente erfasst werden können.

Dadurch kann ein Abgleich zwischen den tatsächlichen Ansatzpunkten und dem digitalen Baustellenplan automatisch und ohne manuellen Eingriff von Personen erstellt werden. Beispielsweise kann auch ein automatischer Vergleich von Dimensionen der Elemente vorgenommen werden, um beispielsweise einen richtigen Bohrdurchmesser zu verifizieren. Schließlich kann auch die Zuordnung von Element-IDs zwischen dem digitalen Baustellenplan und der tatsächlichen Bauausführung automatisch erfolgen und aktuell kommuniziert ("jetzt wird an Pfahl 13 gebohrt") und/oder dokumentiert und anderweitig, beispielsweise zur Bestimmung des Baufortschritts, ausgewertet werden.

Auf der Grundlage des Abgleichens des digitalen Baustellenplans des Baufelds mit dem auf der Basis der Bilderfassung erstellten virtuellen digitalen 3D-Geländemodell des Baufelds können also zum einen Positionsabweichungen identifiziert werden und zum anderen die Ergebnisse des Abgleichs zum Zwecke der Dokumentation des Arbeitsprozesses auch gespeichert und/oder - jedenfalls im Falle von Positionsabweichungen - auch zur Korrektur der Positionierung eines/des Werkzeugs einer/der Baumaschine genutzt werden. Sobald eine Baumaschine auf dem Baufeld verortet ist, kann sie sich selbstverständlich auch an bereits hergestellten markanten Bauelementen mit bekannter Position rekalibrieren/verorten.

Beispielsweise kann für die weitere Verortung innerhalb des Baufelds auch ein Maschinen-Koordinatensystems einer/der Baumaschine 1 oder eines/des Werkzeugs 1a oder eines lokalen Koordinatensystems von dem virtuellen 3D-Geländemodell abgeleitet und das abgeleitete Maschinen-Koordinatensystem zur lokalen Positions- und/oder Ausrichtungsbestimmung der Baumaschine 1 oder des Werkzeugs 1a innerhalb des Baufelds BF - ohne Rückgriff auf eine aktuelle Positionsbestimmung mittels Satellitensignalen oder eine manuelle Einmessung - verwendet werden.

Die Erfindung umfasst auch ein System zur Positionsbestimmung und/oder Ausrichtungsbestimmung von Werkzeugen 1a von Baumaschinen 1 in einem Baufeld BF, insbesondere nach dem erfindungsgemäßen Verfahren. Das System umfasst mindestens eine Stereokamera 2a; 2b, die an mindestens einer Baumaschine 1 oder an einem beweglichen Träger derart angebracht ist, dass die Stereokamera zumindest einen Erfassungsbereich 2a1; 2b1 innerhalb des Baufelds BF, vorzugsweise einen Arbeitsbereich der Baumaschine 1, erfassen kann, mindestens einen Referenzpunkt 3, dessen Position bezüglich eines vordefinierten 3D-Weltkoordinatensystems bekannt ist und der in den Aufnahmen der Stereokamera erkannt werden kann, in dem Erfassungsbereich 2a1; 2b1 der mindestens einen Stereokamera 2a; 2b, und eine Einrichtung, die ausgestaltet ist, um die zuvor beschriebenen Schritte des Verfahrens auszuführen. Die Einrichtung kann beispielsweise in einem Baustellencontainer 5 in oder an dem Baufeld BF untergebracht sein, wobei die Signale der Stereokamera(s) 2a; 2b unter Verwendung eines drahtlosen Übertragungsprotokolls zu der Einrichtung übermittelt werden können. Entsprechendes gilt auch für die Übermittlung von durch die Einrichtung generierten Daten (zur Steuerung und/oder Anzeige) an die Baumaschine(n) in dem Baufeld.

## Patentansprüche

1. Verfahren zur Positionsbestimmung und/oder Ausrichtungsbestimmung von Werkzeugen (1a) von Baumaschinen (1) in einem Baufeld (BF), mit
Anbringen von mindestens einer Stereokamera (2a; 2b) an mindestens einer Baumaschine (1) oder an einem beweglichen Träger, derart, dass die Stereokamera zumindest einen Erfassungsbereich (2a1; 2b1) innerhalb des Baufelds (BF), vorzugsweise einen Arbeitsbereich der Baumaschine (1), erfassen kann,
Vorsehen von mindestens einem Referenzpunkt (3), dessen Position bezüglich eines vordefinierten 3D-Weltkoordinatensystems bekannt ist und der in den Aufnahmen der Stereokamera erkannt werden kann, in dem Erfassungsbereich (2a1;2b1) der mindestens einen Stereokamera (2a; 2b),
Kalibrieren der mindestens einen Stereokamera (2a; 2b) auf der Grundlage der Erfassung des mindestens einen Referenzpunkts (3) und von Triangulation, um eine Transformation zwischen dem 3D-Weltkoordinatensystem und einem 2D-Bildkoordinatensystem der mindestens einen Stereokamera (2a; 2b) zu ermitteln,
Erstellen eines virtuellen digitalen 3D-Geländemodells des Baufelds (BF) durch digitale Bildverarbeitung, insbesondere Stereoskopie, und Bilderkennung auf der Grundlage der Erfassung des Baufelds (BF) durch die mindestens eine Stereokamera (2a;2b), und
Darstellen von vorgegebenen Arbeitspositionen und von erfassten Ist-Werkzeugpositionen und/oder Ist-Werkzeugneigungen des Werkzeugs (1a) der mindestens einen Baumaschine (1) in dem virtuellen digitalen 3D-Geländemodell.

2. Verfahren nach Anspruch 1, umfassend
Positionieren und/oder Ausrichten des Werkzeugs (1a) der mindestens einen Baumaschine (1) auf der Grundlage des virtuellen digitalen 3D-Geländemodells, um Soll- und Ist-Werte zur Übereinstimmung zu bringen.

3. Verfahren nach Anspruch 1 oder 2, umfassend
Wiederholen (intermittierend oder kontinuierlich) der Erfassung des Baufelds (BF) durch die mindestens eine Stereokamera (2a; 2b), vorzugsweise während oder nachdem diese bewegt wird/wurde und einen anderen Erfassungsbereich (2a1; 2b1) aufweist, und fortschreitende Erweiterung und Aktualisierung/Abgleich des virtuellen 3D-Geländemodells durch digitale Bildverarbeitung (Stereoskopie) und Bilderkennung auf der Grundlage der wiederholten Erfassung des Baufelds (BF) durch die mindestens eine Stereokamera (2a; 2b).

4. Verfahren nach einem der Ansprüche 1 bis 3, umfassend Vorsehen von mindestens einer weiteren Stereokamera (2a; 2b), die so angeordnet wird, dass sie einen von dem Erfassungsbereich (2a1; 2b1) der mindestens einen Stereokamera (2a; 2b) verschiedenen oder zumindest teilweise verschiedenen Bereich des Baufeld (BF) und vorzugsweise den mindestens einen Referenzpunkt (3) und/oder einen weiteren Referenzpunkt(3) erfasst,
Kalibrieren der mindestens einen weiteren Stereokamera (2a; 2b) auf der Grundlage der Erfassung des mindestens einen und/oder weiteren Referenzpunkts (3) und Triangulation, um die Transformation zwischen dem 3D-Weltkoordinatensystem und dem 2D-Bildkoordinatensystem der mindestens einen weiteren Stereokamera (2a; 2b) zu ermitteln, und
Einbeziehen der Erfassung des Baufelds (BF) durch die mindestens eine weitere Stereokamera (2a;2b) in das virtuelle 3D-Geländemodell des Baufelds (BF) durch digitale Bildverarbeitung (Stereoskopie) und Bilderkennung.

5. Verfahren nach einem der Ansprüche 1 bis 4, umfassend
Ermitteln weiterer Einflussfaktoren, beispielsweise eines Sonnenstands oder einer Windrichtung und Berücksichtigen derselben bei Erstellung und/oder Aktualisierung/Abgleich des virtuellen (digitalen) 3D-Geländemodells.

6. Verfahren nach einem der Ansprüche 1 bis 5, umfassend
Ableiten eines Maschinen-Koordinatensystems einer/der Baumaschine (1) oder eines/des Werkzeugs (1a) oder eines lokalen Koordinatensystems von dem virtuellen 3D-Geländemodell und Verwenden des abgeleiteten Maschinen-Koordinatensystems zur lokalen Positions- und/oder Ausrichtungsbestimmung der Baumaschine (1) oder des Werkzeugs (1a) innerhalb des Baufelds (BF).

7. Verfahren nach einem der Ansprüche 1 bis 6, umfassend
Abgleichen eines digitalen Baustellenplans des Baufelds mit dem virtuellen 3D-Geländemodell des Baufelds und Identifizieren von Positionsabweichungen.

8. Verfahren nach Anspruch 7, umfassend
Speichern des Ergebnisses des Abgleichs zum Zwecke der Dokumentation des Arbeitsprozesses.

9. Verfahren nach Anspruch 7 oder 8, umfassend
Nutzen des Ergebnisses des Abgleichs im Falle von Positionsabweichungen zur Korrektur der Positionierung eines/des Werkzeugs einer/der Baumaschine.

10. System zur Positionsbestimmung und/oder Ausrichtungsbestimmung von Werkzeugen (1a) von Baumaschinen (1) in einem Baufeld (BF), insbesondere nach dem Verfahren gemäß einem der Ansprüche 1 bis 9, umfassend:
mindestens eine Stereokamera (2a; 2b), die an mindestens einer Baumaschine (1) oder an einem beweglichen Träger, derart angebracht ist, dass die Stereokamera zumindest einen Erfassungsbereich (2a1; 2b1) innerhalb des Baufelds (BF), vorzugsweise einen Arbeitsbereich der Baumaschine (1), erfassen kann, mindestens einen Referenzpunkt (3), dessen Position bezüglich eines vordefinierten 3D-Weltkoordinatensystems bekannt ist und der in den Aufnahmen der Stereokamera erkannt werden kann, in dem Erfassungsbereich (2a1; 2b1) der mindestens einen Stereokamera (2a; 2b), und
eine Einrichtung, die ausgestaltet ist, um folgende Schritte des Verfahrens auszuführen:
Kalibrieren der mindestens einen Stereokamera (2a; 2b) auf der Grundlage der Erfassung des mindestens einen Referenzpunkts (3) und von Triangulation, um eine Transformation zwischen dem 3D-Weltkoordinatensystem und einem 2D-Bildkoordinatensystem der mindestens einen Stereokamera (2a; 2b) zu ermitteln,
Erstellen eines virtuellen digitalen 3D-Geländemodells des Baufelds (BF) durch digitale Bildverarbeitung, insbesondere Stereoskopie, und Bilderkennung auf der Grundlage der Erfassung des Baufelds (BF) durch die mindestens eine Stereokamera (2a; 2b), und
Darstellen von vorgegebenen Arbeitspositionen und von erfassten Ist-Werkzeugpositionen und/oder Ist-Werkzeugneigungen des Werkzeugs (1a) der mindestens einen Baumaschine (1) in dem virtuellen digitalen 3D-Geländemodell.
